# EUROPÄISCHE PATENTANMELDUNG

(11) **EP 1 874 051 A1**
(43) Veröffentlichungstag der Anmeldung: **02.01.2008**
(21) Anmeldenummer: 06013201.6
(22) Anmeldetag: 27.06.2006
(51) Int. Cl.: H04N 7/173, G06F 21/00

(54) **Verfahren zur Übermittlung eines Informationsstroms gemäss Anforderung einer Empfangsstelle**

(71) Anmelder: Holwerda, Denny, 7545 Enschede (NL)
(72) Erfinder: Holwerda, Denny, 7545 Enschede (NL)
(74) Vertreter: Stenger, Watzke & Ring

(57) **Zusammenfassung**

Die vorliegende Erfindung betrifft ein Verfahren zur Übermittlung eines Informationsstroms, der abrufbereit auf Anforderung einer Empfangsstelle vorgehalten wird, wobei über verfügbare Informationsströme eine Übersicht erstellt und unter Zuordnen einer Berechtigung abrufbar bereitgestellt wird. Hieraus ergibt sich die Aufgabe der vorliegenden Erfindung, ein gattungsgemäßes Verfahren dahingehend weiterzubilden, daß seine Flexibilität und Nutzerfreundlichkeit verbessert wird. Als Lösung wird vorgeschlagen, daß ein Kommunikationskanal zur Übermittlung eines ausgewählten lnformationsstroms bereitgestellt wird, der gewünschte Informationsstrom ausgewählt wird und an eine vorgebbare Empfängerstelle übermittelt wird.

## Beschreibung

Die vorliegende Erfindung betrifft ein Verfahren zur Übermittlung eines Informationsstroms, der abrufbereit auf Anforderung einer Empfangsstelle vorgehalten wird, wobei über verfügbare Informationsströme eine Übersicht erstellt und unter Zuordnen einer Berechtigung abrufbar bereitgestellt wird.

Gattungsgemäße Verfahren sind im Bereich Video-on-Demand und Pay-TV bekannt. Der Nutzer erhält von einer Betreiberstelle gegen Zahlung einer Gebühr eine Decodiereinrichtung, die es ihm ermöglicht, für einen vorgegebenen bezahlten Zeitraum diese Dienstleistung zu nutzen. Bekannt sind ferner Download-Börsen im Internet, bei denen Musik bzw. Videos gegen Bezahlung auf einen Rechner abspielbar heruntergeladen werden können. Als nachteilig erweist es sich, daß die bekannten Verfahren bezüglich Auswahlmöglichkeiten sehr begrenzt sind. So ist es zum Beispiel nicht möglich, von einer Internetbörse einen Video über das Breitbandkabelnetz auf einem Fernsehgerät abzuspielen. Darüber hinaus sind die bekannten Verfahren daran geknüpft, daß die zu sendenden Informationsströme nicht nur digitaler Natur sind, sondern darüber hinaus auch ein vorgegebenes Datenformat aufweisen.

Hieraus ergibt sich die Aufgabe der vorliegenden Erfindung, ein gattungsgemäßes Verfahren dahingehend weiterzubilden, daß seine Flexibilität und Nutzerfreundlichkeit verbessert wird.

Als Lösung wird mit der vorliegenden Erfindung vorgeschlagen, daß ein Kommunikationskanal zur Übermittlung eines ausgewählten Informationsstroms bereitgestellt wird, der gewünschte Informationsstrom ausgewählt wird und an eine vorgebbare Empfängerstelle übermittelt wird.

Erstmals ist es mit der Erfindung möglich, daß empfängerseitig der Kommunikationskanal zur Übermittlung des ausgewählten Informationsstroms vorgegeben werden kann. Das Verfahren ist somit nicht mehr nur an einen einzigen Kommunikationskanal bzw. an eine festgelegte Art von Kommunikationskanälen gebunden, sondern kann technologieübergreifend auf quasi beliebige Kommunikationskanäle angewendet werden. Der Kommunikationskanal kann beispielsweise ein Satellitenkanal oder ein Kabelkanal sein, er kann aber auch eine Telefonleitung, eine Verbindung in einem Mobilfunknetz, eine Funkverbindung, eine optische Kommunikationsverbindung oder ähnliches sein. Die eigentliche Auswahl des Kommunikationskanals kann dadurch erfolgen, daß der Empfänger über einen von ihm vorgegebenen Kommunikationskanal in Kommunikationsverbindung mit der Sendestelle tritt, damit die Übermittlung des Informationsstroms veranlaßt werden kann. Die Sendestelle kann daraufhin die Übermittlung des Informationsstroms über den durch die Empfängerstelle ausgewählten Kommunikationskanal vornehmen. Es kann aber auch vorgesehen sein, daß die Sendestelle zu Beginn der Übermittlung des Informationsstroms eine Mitteilung an die Empfängerstelle übermittelt, auf welchem Kanal die Übermittlung des Informationsstroms erfolgen soll. Dies ist beispielsweise in dem Fall sinnvoll, wenn der für die Kontaktaufnahme durch die Empfängerstelle gewählte Kommunikationskanal zur Übermittlung des Informationsstroms nicht geeignet ist. Dies kann beispielsweise dann der Fall sein, wenn der Kommunikationskanal nicht die erforderliche Bandbreite für die Übermittlung des Informationsstroms aufweist. Die Sendestelle hält die verfügbaren Informationsströme abrufbereit, so daß sie auf Anforderung einer Empfangsstelle im wesentlichen unmittelbar übermittelt werden können. Die Übermittlungsgeschwindigkeit ist vorzugsweise an die Empfängerstellenerfordernisse, insbesondere hinsichtlich der Wiedergabegeschwindigkeit, angepaßt. Der Kommunikationskanal kann als Ländergrenzen übergreifender Kommunikationskanal ausgebildet sein. Die Sende- und die Empfangsstelle können unterschiedlichen Ländern angehören.

Die Anforderung erfolgt aufgrund einer Berechtigung, die beispielsweise als allgemeiner Code oder auch als individueller Code ausgebildet sein kann. Ein allgemeiner Code kann beispielsweise vorgesehen sein, um einen zeitlich begrenzten Zugriff auf sämtliche verfügbaren Informationsströme zu ermöglichen. Ein individueller Code kann diesbezügliche Beschränkungen enthalten oder beispielsweise nur für einen oder mehrere individuelle Informationsströme vorgesehen sein. Ein Informationsstrom kann beispielsweise durch das Abspielen von Musik oder eines Videofilms oder auch eines interaktiven Computerspiels oder dergleichen gebildet sein. Die Berechtigung kann beispielsweise für einzelne oder mehrere Filme bzw. Musikstücke gültig sein. Die Berechtigung kann im Vorfeld erworben werden, indem beispielsweise ein Berechtigungscode oder dergleichen bereitgestellt wird. Es kann aber auch vorgesehen sein, daß die Berechtigung durch eine Anwahl einer kostenpflichtigen Telefonnummer, eines Dialers oder dergleichen gebildet ist. In diesem Fall wird von der Empfangsstelle eine vorgebbare Rufnummer angewählt, und während der Dauer dieser Verbindung der Informationsstrom in gewünschter Weise übermittelt. Daneben kann auch vorgesehen sein, daß mittels weiterer Authentifizierungstechnologien, beispielsweise durch Eingeben eines Kennworts in einem geschützten Bereich eine Berechtigung aktiviert wird, so daß ein gewünschter Informationsstrom übermittelt wird. Die Berechtigung kann einen Auswahlcode umfassen, der auf einen oder eine Kategorie von Informationsströmen gerichtet ist. Die Vergabe eines Berechtigungscodeworts kann beispielsweise an die Einwilligung zur Ausführung einer Zahlungstransaktion gekoppelt sein.

In einer Weiterbildung wird vorgeschlagen, daß der Informationsstrom digital und/oder analog übermittelt wird. Dies ermöglicht es, auch bisher nur analog verfügbare Informationsströme zu übermitteln. Ferner kann die Übermittlung an das verfügbare Kommunikationsnetz bzw. den Kommunikationskanal angepaßt werden. So können beispielsweise auch Kombinationen von unterschiedlichen Arten von Kommunikationskanälen miteinander kombiniert werden, um den Informationsstrom von der Sendestelle zur Empfangsstelle zu übermitteln. Dadurch wird das erfindungsgemäße Verfahren auch für kleine Kommunikationsnetze und lokale Anbieter interessant, da ein vorhandenes Kommunikationsnetz für das erfindungsgemäße Verfahren verwendet werden kann.

In einer weiteren Ausgestaltung wird vorgeschlagen, daß der Informationsstrom zeitbeschränkt übermittelt wird. So kann beispielsweise vorgesehen sein, daß die Berechtigung nur innerhalb eines vorgebbaren Zeitfensters Gültigkeit hat. Der Informationsstrom kann deshalb nur innerhalb dieses Zeitraums übermittelt werden. Es kann darüber hinaus vorgesehen sein, daß Anfangs- bzw. Endpunkt des Zeitfensters von der Empfängerstelle festgelegt werden können. So kann beispielsweise vorgesehen sein, daß das Zeitfenster mit Beginn der Übermittlung des Informationsstroms anfängt. Das Zeitfenster weist vorzugsweise einen Zeitbereich auf, der den Umfang des Informationsstroms umfaßt, vorzugsweise jedoch um einen bestimmten, vorgebbaren Betrag überschreitet. So kann beispielsweise vorgesehen sein, daß das Zeitfenster 50 % der für die Übermittlung des Informationsstroms erforderlichen Zeitdauer überschreitet.

Ferner wird vorgeschlagen, daß der Informationsstrom gesteuert übermittelt wird.

Dies ermöglicht es der Sendestelle, die Übermittlung des Informationsstroms anzuhalten, Bereiche des Informationsstroms zu wiederholen oder auch die Übermittlung des Informationsstroms abzubrechen. Auf diese Weise kann auch durch die Sendestelle der Beginn eines in der Zukunft liegenden Zeitraums bzw. Zeitpunkts für die Übermittlung des Informationsstroms vorgegeben werden. Es kann jedenfalls vorgesehen sein, daß diese Funktion an eine entsprechende Berechtigung für deren Ausführung gekoppelt ist. Die Berechtigung kann hierzu einen Code aufweisen, der die Steuerung der Sendestelle durch die Empfängerstelle freigibt.

Ein Vorschlag sieht vor, daß zum Steuern der Übermittlung des Informationsstroms Empfängerbefehle verwendet werden. Die Befehle werden danach von der Empfängerstelle beispielsweise über eine Telefonleitung, das GSM-Netz, das EDGE-Netz oder dergleichen an die Sendestelle übermittelt. Es kann auch vorgesehen sein, daß ein Wiedergabegerät der Empfängerstelle Funktionstasten aufweist, mittels denen die gewünschten Befehle aktivierbar sind. So können beispielsweise Befehle für schnellen Vorlauf, schnellen Rücklauf, Pause, Wiederholung und dergleichen vorgesehen sein.

Mit Vorteil wird vorgeschlagen, daß die Bereitstellung des Kommunikationskanals durch die Empfängerstelle vorgebbar ist. Auf diese Weise ist es möglich, daß durch die Empfängerstelle entschieden wird, welcher Kommunikationskanal verwendet werden soll. So kann der Kommunikationskanal beispielsweise das Internet, eine Telefonleitung, ein TV-Kabelnetz, ein GSM-Netz, ein UMTS-Netz, ein EDGE-Netz (Enhanced Data rates for GSM Evolution; eine Weiterentwicklung des Datendienstes GPRS) oder dergleichen sein. Der Kommunikationskanal kann für eine Informationsübermittlung gemäß einschlägiger Standards wie DBV-T, DBV-C, DBV-S und weiteren ausgebildet sein. Das Internet kann vorzugsweise über eine Datenautobahn wie DSL verfügen. So kann beispielsweise vorgesehen sein, daß die Empfängerstelle über eine Telefonleitung mit der Sendestelle in Kommunikation tritt und als Kommunikationskanal für die Übermittlung des Informationsstroms das TV-Kabelnetz vorgibt. So kann empfängerseitig die kostengünstigste Kommunikationsverbindung ausgewählt werden.

Weiterhin wird vorgeschlagen, daß der Informationsstrom zumindest teilweise parallel über den Kommunikationskanal übermittelt wird. Der Kommunikationskanal ist in dieser Ausgestaltung für eine teilweise parallele Informationsübertragung geeignet. Derartige Kommunikationskanäle können beispielsweise Mehrdrahtleitungen, Mehrkanalübertragung bei Funk oder optischen Übertragungswegen , insbesondere Richtfunkstrecken, oder auch paketweise Datenübertragung über das Internet und dergleichen sein. Der Kommunikationskanal kann bei Funk auch durch ein W-LAN- oder ein Wimax-Netzwerk gebildet sein. Dies ermöglicht nicht nur eine Erhöhung der Informationsübermittlungsgeschwindigkeit, sondern es kann darüber hinaus erreicht werden, daß der Kommunikationskanal beispielsweise im Zeit- bzw. auch im Frequenzmultiplex mehrfach genutzt werden kann. Auf diese Weise können Kosten gesenkt werden.

In einer vorteilhaften Weiterbildung wird vorgeschlagen, daß ein bidirektionaler Kommunikationskanal verwendet wird. So besteht die Möglichkeit, daß empfängerseitig über den bidirektionalen Kommunikationskanal die Sendestelle kontaktiert wird und die Übermittlung des Informationsstroms veranlaßt wird. Über den gleichen Kanal jedoch lediglich von der Sendestelle zum Empfänger kann der Informationsstrom übermittelt werden. Während der Übermittlung besteht empfängerseitig die Möglichkeit, Steuerbefehle über den gleichen Kanal an die Sendestelle zu senden, um in gewünschter Weise die Übermittlung des Informationsstroms zu steuern.

Daneben kann auch vorgesehen sein, daß die Empfängerbefehle über einen separaten Kommunikationskanal an eine Sendestelle übermittelt werden. So kann beispielsweise vorgesehen sein, daß empfängerseitig Befehle über eine separate Telefonverbindung an die Sendestelle übermittelt werden. Hierzu kann eine zweite Kommunikationsverbindung beispielsweise über das Festnetz, das EDGE-Netz, das GSM-Netz oder dergleichen zur Sendestelle hergestellt werden, über welches dann die entsprechenden Befehle durchgegeben werden können.

In einer weiteren Ausgestaltung der vorliegenden Erfindung wird vorgeschlagen, daß mehrere Sendestellen verwendet werden. So kann beispielsweise vorgesehen sein, daß die Informationsströme auf eine Vielzahl von Sendestellen verteilt abrufbar bereitgehalten werden. Dies kann beispielsweise aufgrund der Art der Informationsströme vorgesehen sein, wobei Videofilme grundsätzlich von einer Sendestelle und Musik grundsätzlich von einer anderen Sendestelle übermittelt werden, oder auch die Informationsströme auf unterschiedlichen Servern oder an unterschiedlichen räumlichen Stellen gespeichert sind. Dies ermöglicht nicht nur eine sendestellenseitige Optimierung des Ablaufs, sondern es kann auch eine an die jeweilige Art des Informationsstroms angepaßte Rechteverwaltung vorgesehen werden.

Es wird ferner vorgeschlagen, daß zur Bereitstellung des Informationsstroms die Informationsquellen verknüpft werden. So kann beispielsweise der Informationsstrom aus verschiedenen Quellen zusammengestellt werden. Sind beispielsweise unterschiedliche Szenen eines Videofilms auf unterschiedlichen Servern gespeichert, so werden sie in bestimmungsgemäßer Reihenfolge miteinander abrufbar verknüpft bereitgestellt. Bei der Übermittlung des Informationsstroms werden dann die entsprechenden Quellen in ihrer vorgegebenen Reihenfolge aufgerufen, um einen kontinuierlichen Informationsstrom ermöglichen zu können. Diese Ausgestaltung eignet sich ferner gut für die Verwendung bei interaktiven Computerspielen, wobei unterschiedliche Level durch unterschiedliche Sendestellen bereitgestellt werden. Auch die Verknüpfung mit weiteren Empfängerstellen kann vorgesehen sein, beispielsweise bei einem interaktiven Computerspiel, bei dem mehrere unabhängige unterschiedliche Empfängerstellen gemeinsam ein Spiel spielen.

Um eine Bereitstellung des Informationsstroms insbesondere bei mehreren Sendestellen zu koordinieren, wird vorgeschlagen, daß die Bereitstellung des Informationsstroms durch eine Zentrale gesteuert wird. Mit der Zentrale kann darüber hinaus die Kommunikation mit der Empfängerstelle ausgeführt werden, so daß beispielsweise Steuerbefehle der Empfängerstelle an die entsprechend zuständige Sendestelle übermittelt werden. Die Ausgestaltung erweist sich insbesondere dann von Vorteil, wenn die Sendestellen unterschiedlichen Ländern angehören.

Die Zentrale kann ferner dafür vorgesehen sein, daß der Informationsstrom durch die Zentrale abrufbar zusammengestellt wird. Dies erweist sich insbesondere dann als vorteilhaft, wenn der Informationsstrom beispielsweise auf mehrere Sendestellen verteilt ist. So kann beispielsweise vorgesehen sein, daß die Zentrale den Informationsstrom zusammenstellt und auf einem Abrufserver abrufbar zwischenspeichert. Ein schneller Abruf des Informationsstroms kann erreicht werden. Dies ermöglicht es, Kosten für eine Kommunikationsverbindung zu reduzieren.

Es kann ferner vorgesehen sein, daß die Übersicht durch die Zentrale erstellt wird. So können sämtliche Informationen bezüglich des Informationsstroms oder auch bezüglich aller verfügbaren Informationsströme in der Zentrale abrufbar gesammelt werden, wodurch vorteilhaft mit geringem Aufwand eine Übersicht erstellt werden kann. Darüber hinaus bietet sich für die Empfängerstelle der Vorteil, daß die Übersicht an einer zentralen Stelle für alle Informationsströme erhältlich ist. Dies ermöglicht es der Empfängerstelle, auf einfache Weise eine vollständige Information über die möglichen Informationsströme zu erhalten. Die Übersicht kann in einer Qualität mit niedriger Auflösung erfolgen, um eine hierfür erforderliche Übertragungskapazität zu reduzieren.

In einer weiteren Ausgestaltung wird vorgeschlagen, daß die Berechtigung durch die Zentrale vergeben wird. Dies ermöglicht es, eine Berechtigung angepaßt auf die Anzahl, die Art und den Umfang der Informationsströme angepaßt zu vergeben. Durch die zentrale Vergabe wird darüber hinaus erreicht, daß lediglich eine einzige anzusprechende Stelle für die Vergabe einer Berechtigung vorhanden ist. Dies ermöglicht eine Vereinfachung der Betriebsabläufe.

Es kann vorgesehen sein, daß die Berechtigung für mehrere Informationsströme vergeben wird. So kann beispielsweise die Berechtigung für eine beliebige Kategorie von Videofilmen, Musikstücken, Computerspielen oder dergleichen gültig ist. Die Berechtigung enthält beispielsweise ein Zeitfenster, in welchem eine beliebige Anzahl von Informationsströmen innerhalb einer Klasse ausgewählt und übermittelt werden können. So kann beispielsweise eine Berechtigung vorgesehen sein, die lediglich die Übermittlung der Informationsströme für klassische Musikstücke von Mozart erlaubt. In einem Beispiel kann auch vorgesehen sein, daß beispielsweise Zeichentrickfilme übermittelt werden können. Natürlich kann auch vorgesehen sein, daß für Computerspiele, Onlinegames oder dergleichen Berechtigungen über einen zentralen Zugangsserver gegen Vorauskasse durch Anlegen eines sogenannten Account vergeben werden. Die Berechtigungen können eine zeitlich begrenzte Gültigkeit aufweisen.

Darüber hinaus wird vorgeschlagen, daß die Berechtigung für einen vorgebbaren Zeitraum vergeben wird. Der vorgebbare Zeitraum kann eine beliebige Zeiteinheit sein, beispielsweise ein oder mehrere Tage, eine Woche, ein Monat oder auch ein Jahr oder dergleichen. Zusätzlich können natürlich weitere Bedingungen an die Berechtigung geknüpft sein, wie beispielsweise die Beschränkung auf eine bestimmte Art von Informationsströmen. Weiterhin kann vorgesehen sein, daß gesteuert Werbung eingespielt wird. Auch ein Erwerb weiterer Berechtigungen durch beispielsweise ein Bonussystem oder dergleichen kann vorgesehen sein.

In einer vorteilhaften Weiterbildung wird vorgeschlagen, daß die Berechtigung überprüft wird. Das Überprüfen bedeutet in diesem Zusammenhang nicht nur, daß ein gültiger Code vorliegen muß, sondern es erfordert darüber hinaus die Verifikation der Empfängerstelle, beispielsweise indem persönliche Daten des Empfängers oder dergleichen verifiziert werden. Die Verifikation kann beispielsweise auch mittels geeigneter Dokumente wie Ausweis, Scheckkarten, Smart-Cards oder dergleichen erfolgen, mit denen die zusätzlichen Informationen für die Verifikation eines Empfängers bereitgestellt werden können. Es kann ferner vorgesehen sein, daß die Empfängerstelle einen Code aufweist, der ebenfalls überprüfbar ist. So kann vorgesehen sein, daß die Berechtigung lediglich für bestimmte Empfängerstellen bzw. Empfängercodes gültig ist. Dabei muß es sich nicht lediglich um eine einzige Empfängerstelle handeln, sondern es kann auch eine Berechtigung sein, die für eine Mehrzahl von Empfängerstellen eine Gültigkeit hat. Dies ist beispielsweise dann vorteilhaft, wenn mehrere berechtigte Empfängerstellen gleichsam mittels einer Berechtigung die Informationsströme übermittelt bekommen sollen. So etwas kann beispielsweise in einem Haushalt einer Familie vorgesehen sein, bei denen mehrere Empfängerstellen der einzelnen Familienmitglieder mit einer gemeinsamen Berechtigung versehen sind.

Um die Manipulierbarkeit zu reduzieren, wird vorgeschlagen, daß die Prüfung der Berechtigung während der Übermittlung des Informationsstroms wiederholt wird. Die Wiederholung kann zeitdiskret zu bestimmten Zeitpunkten oder auch permanent erfolgen. Die Zeitpunkte der Überprüfung können zeitdiskret, äquidistant oder auch stochastisch verteilt gewählt sein. Die Übermittlung des Informationsstroms erfolgt dabei nur solange, wie die Berechtigung gültig ist. Ist die Berechtigung nicht mehr gültig, kann ein Abbruch der Übermittlung vorgesehen sein. Daneben kann natürlich auch eine entsprechende Meldung an die Sendestelle vorgesehen sein.

Gemäß einer weiteren Ausgestaltung kann vorgesehen sein, daß die Berechtigung nach Abbruch der Übermittlung erlischt. Auf diese Weise kann die Manipulierbarkeit des erfindungsgemäßen Verfahrens behindert werden, denn es besteht nicht die Möglichkeit, eine Berechtigung mehrfach zu benutzen, wenn sie lediglich für die Übermittlung eines einzelnen Informationsstroms in kontinuierlicher Weise vorgesehen ist.

Es wird ferner vorgeschlagen, daß die Berechtigung die Erlaubnis zum Speichern des Informationsstroms auf einen Informationsträger umfaßt. Ein Informationsträger kann beispielsweise ein elektronischer Speicher sein, beispielsweise ein RAM, eine Festplatte oder dergleichen, oder es kann sich auch um einen Informationsträger wie eine CD, DVD, Kassette, oder dergleichen handeln. Der Informationsstrom kann beispielsweise optisch oder magnetisch oder auch elektrisch, holographisch, mechanisch (z. B. Schallplatte) oder dergleichen aufgezeichnet sein. Auf diese Weise kann erreicht werden, daß die Empfängerstelle den Informationsstrom zu einem beliebigen anderen Zeitpunkt beliebig oft wiedergeben kann. So kann beispielsweise vorgesehen sein, daß der Informationsstrom bestimmte Merkmale nicht aufweist, die es ermöglichen, daß er gespeichert werden kann. Fehlt es an der nötigen Berechtigung, kann vorgesehen sein, daß der Informationsstrom Merkmale aufweist, die ein Speichern auf einem Informationsträger behindern. Dies kann beispielsweise durch zusätzliche Daten bzw. Informationen erreicht werden, die eine Speicherfunktion blockieren oder zumindest das Aufzeichnen der Daten derart stören, daß eine Wiedergabe nur mit einem erheblichen Aufwand oder gar nicht möglich ist.

In einer Ausgestaltung wird vorgeschlagen, daß der Informationsstrom zumindest zeitweise durch die Empfängerstelle gespeichert wird. Es handelt sich hierbei um ein flüchtiges Speichern, welches zum Beispiel sinnvoll ist, um einen teilweise parallel übertragenden Informationsstrom in seiner korrekten Reihenfolge wieder zusammenstellen zu können. So wird zum Beispiel bei der Übertragung eines Informationsstroms über das Internet dieser in Datenpakete unterteilt, die auf unterschiedlichen Wegen und zu unterschiedlichen Zeiten die Empfängerstelle erreichen. An dieser werden die Datenpakete wieder zusammengestellt und der ursprüngliche Informationsstrom zurückgewonnen.

Darüber hinaus wird vorgeschlagen, daß der Informationsträger nach Wiedergabe des Informationsstroms gelöscht wird. So kann vorgesehen sein, daß der Informationsstrom nur einmal vom Informationsträger wiedergegeben werden kann. Dies ist insbesondere dann vorteilhaft, wenn, wie zuvor bereits diskutiert, der Informationsstrom empfängerseitig zunächst aus unterschiedlichen Teilinformationsströmen in seiner korrekten Reihenfolge wieder zusammengesetzt werden muß. Es kann darüber hinaus vorgesehen sein, daß der Informationsträger selbst nur einmal den Informationsstrom wiedergeben kann. Die Wiedergabe selbst zerstört die auf dem Informationsträger abgelegte Information, so daß tatsächlich nur eine einmalige Wiedergabe gewährleistet ist. Ein derartiger Informationsträger kann beispielsweise eine CD, DVD oder ein anderes geeignetes optisches Speichermedium sein, deren Informationsstruktur beim Auslesen mittels eines Laserstrahls gleichzeitig wieder zerstört wird.

Weiterhin wird vorgeschlagen, daß zur Verifikation der Berechtigung die Auswertung biometrischer Daten verwendet wird. So kann beispielsweise empfängerseitig vorgesehen sein, daß eine Sensoreinheit für biometrische Daten vorgesehen ist, die sendeseitig abfragbar ist. Biometrische Daten können beispielsweise ein Fingerabdruck, ein Iris-Scan oder dergleichen sein. Die biometrischen Daten können mit Daten eines Ausweises abgeglichen werden oder auch mit in der Zentrale hinterlegten biometrischen Daten. Diese Ausgestaltung erlaubt vorteilhaft, daß geheim eingestufte Informationsströme nur an dafür autorisierte Empfängerstellen übermittelt werden.

In einer vorteilhaften Weiterbildung der vorliegenden Erfindung wird vorgeschlagen, daß der Informationsstrom zur Übermittlung verschlüsselt wird. Das Verschlüsseln kann beispielsweise analog oder auch digital erfolgen, vorzugsweise abhängig davon, ob der Informationsstrom in analoger bzw. digitaler Form zur Übermittlung vorliegt. Die Verschlüsselung kann über bekannte Verschlüsselungsalgorithmen erfolgen, wie sie insbesondere aus der Mathematik und der Kryptologie bekannt sind. Hierdurch kann erreicht werden, daß der Informationsstrom nicht in unberechtigter Weise durch Dritte abgehört werden kann, die sich am Kommunikationskanal ankoppeln. So können auch vertrauliche Informationsströme übermittelt werden, die beispielsweise persönliche Informationen oder geheimzuhaltende Informationen enthalten.

Darüber hinaus wird vorgeschlagen, daß der Informationsstrom mit einer Redundanz versehen wird. Die Redundanz ermöglicht es, den Informationsstrom empfängerseitig vollständig zu empfangen, auch wenn der Kommunikationskanal mit Störungen beaufschlagt ist. So können beispielsweise Fehlerkorrekturmaßnahmen wie CRC-Blockcodierungen, Verschachtelungen und dergleichen vorgesehen sein. Es können darüber hinaus auch mehrere Codierungen miteinander kombiniert werden, beispielsweise zwei Blockcodierungen mit einer Verschachtelung und dergleichen. Eine hohe Störsicherheit des Informationsstroms kann erreicht werden.

Gemäß einer weiteren Ausgestaltung kann während der Übermittlung ein anderer Informationsstrom ausgewählt werden. So kann beispielsweise vorgesehen sein, daß eine Berechtigung das Umschalten auf einen anderen Film ermöglicht, der beispielsweise dergleichen Klasse angehört oder ähnlichem. Sollte empfängerseitig das Interesse an dem ausgewählten Informationsstrom nicht mehr bestehen, so kann vorteilhaft ein anderer möglicher Informationsstrom ausgewählt werden. Es kann darüber hinaus vorgesehen sein, daß lediglich Ausschnitte von unterschiedlichen Informationsströmen übermittelt werden, um einen Überblick an der Empfängerstelle zu erreichen, welche Informationsströme empfängerseitig interessant sein könnten. So kann der Empfänger beispielsweise aufgrund einer solchen Übermittlung eine Vorauswahl von Informationsströmen treffen. Praktisch bedeutet dies, daß zum Beispiel Ausschnitte aus verschiedenen Filmen übermittelt werden und der Empfänger sich einen Überblick über die unterschiedlichen Filme verschaffen kann, die ihn interessieren könnten. Er erhält demnach Informationen über die Filme, so daß er einen späteren gewünschten Film nach seiner Interessenlage auswählen kann. Es kann beispielsweise vorgesehen sein, daß das Umschalten nur innerhalb einer Kategorie von Informationsströmen vorgesehen ist.

Gemäß einer vorteilhaften Weiterbildung wird vorgeschlagen, daß als Empfängerstelle ein Netzwerk verwendet wird. Das Netzwerk kann beispielsweise in einem Haushalt vorgesehen sein, an das mehrere PCs und/oder Fernsehgeräte gekoppelt sind. Es kann auch eine Home-Entertainment-Station vorgesehen sein. Die Empfängerstelle verfügt demnach über mehrere Wiedergabemöglichkeiten bzw. Wiedergabegeräte, die bedarfsweise für den Informationsstrom vorgesehen und ausgewählt sein können. Das Netzwerk kann aus einem lokalen Netzwerk beispielsweise einem Intranet oder dergleichen gebildet sein, es kann jedoch auch aus einem TV-Kabelnetz oder dergleichen gebildet sein oder aus einer Kombination hiervon.

Gemäß einer Weiterbildung kann vorgesehen sein, daß der Informationsstrom nur an einer vorgebbaren Wiedergabestelle der Empfangsstelle wiedergegeben wird. So kann beispielsweise der Informationsstrom auf eine spezielle vorgebbare Wiedergabestelle festgelegt sein. Diese kann beispielsweise ein Fernsehgerät oder auch ein PC sein. Auf diese Weise kann erreicht werden, daß der Informationsstrom nicht an beliebig viele Wiedergabestellen übermittelt wird.

Gemäß einer Weiterbildung wird während der Übermittlung des Informationsstroms die Wiedergabestelle umgeschaltet. Dies ermöglicht es, den Informationsstrom von einer Wiedergabestelle auf eine andere Wiedergabestelle umzuleiten. Vorteilhaft ist dies beispielsweise dann, wenn die Wiedergabe eines Videofilms von der Küche auf das Wohnzimmer einer Wohnung umgeschaltet werden soll, beispielsweise wenn das Essen beendet ist und die angenehmere Atmosphäre des Wohnzimmers für den Genuß der Wiedergabe genutzt werden soll.

In einer vorteilhaften Weiterbildung wird vorgeschlagen, daß der Informationsstrom nur an eine für diesen Informationsstrom zugelassene Wiedergabestelle übermittelt wird. Auf diese Weise läßt sich ein Jugendschutz bzw. Kinderschutz realisieren, wobei bestimmte Kategorien oder Klassen von Informationsströmen nicht an Wiedergabestellen im Zugriffsbereich von Jugendlichen bzw. Kindern übermittelt werden können. Hierzu kann beispielsweise vorgesehen sein, daß die Wiedergabestellen eigene Codierungen an die Sendestelle übermitteln, die Sendestellen die Zulässigkeit der Codes überprüfen und die Übermittlung in Abhängigkeit von der Zulässigkeit aufnehmen oder nicht.

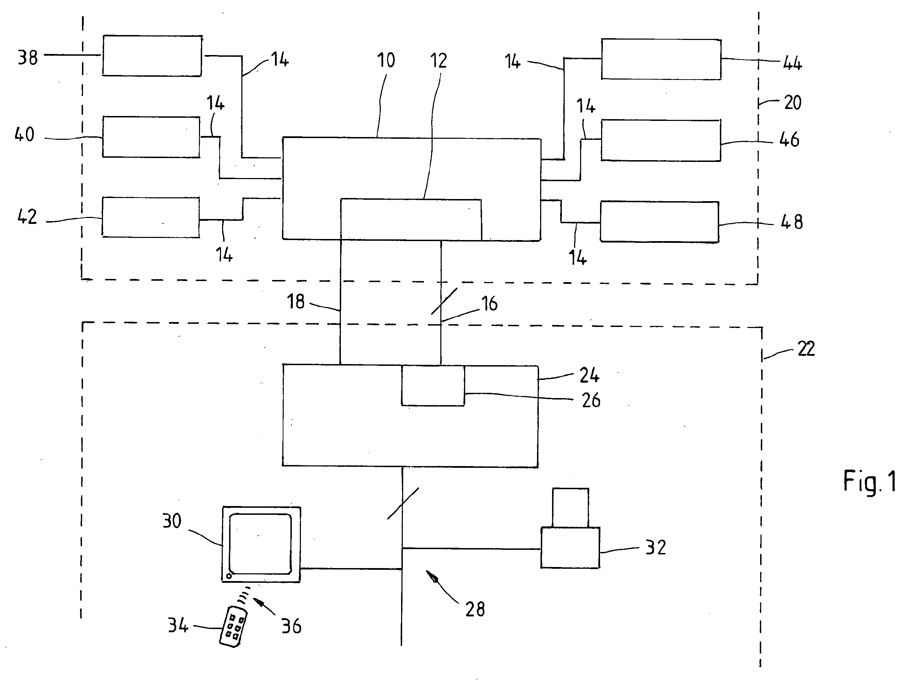

Weitere Vorteil und Merkmale sind der folgenden Beschreibung von Ausführungsbeispielen zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel in Fig. 1 verwiesen. Die Zeichnungen sind Schemazeichnungen und dienen nur der Erläuterung der folgenden Ausführungsbeispiele.

Es zeigen:
- Fig. 1: schematisch eine Übersicht eines Systems zur Anwendung des erfindungsgemäßen Verfahrens und
- Fig. 2: schematisch einen Aufbau einer Berechtigung.

Fig. 1 zeigt eine Zentrale 10 mit einem Abrufserver 12, der über Kommunikationsverbindungen 14 mit Servern 38 bis 48 in Kommunikationsverbindung steht, die jeweils unterschiedliche Kategorien bzw. Klassen von Informationsströmen aufweisen. So enthält der Server 38 Abenteuerfilme, der Server 40 Dokumentationsfilme, der Server 42 Fantasy-Filme, der Server 44 klassische Musikstücke, der Server 46 Pop-Musikstücke sowie der Server 48 Heimatmusikstücke.

Die Sendestelle 20 steht über eine Telefonverbindung 18 des Festnetzes in Kommunikationsverbindung mit einer Empfangsstelle 22. Zwischen der Sendestelle 20 und der Empfängerstelle 22 ist ferner ein Kabel-TV-Netzwerk 16 vorgesehen, mittels dem Informationsströme von der Sendestelle 20 zur Empfängerstelle 22 in unidirektionaler Richtung übermittelbar sind.

Die Empfangsstelle 22 weist eine Kommunikationseinheit 24 auf, die sowohl an die Telefonverbindung 18 als auch an das Kabel-TV-Netzwerk 16 angeschlossen ist. Die Kommunikationseinheit 24 weist ferner eine flüchtige Speichereinheit 26 auf, die in der Lage ist, eine vorgegebene Menge an Informationen eines eingehenden Informationsstroms zu speichern. Die flüchtige Speichereinheit 26 ist vorliegend als RAM ausgebildet.

Die Kommunikationseinheit 24 steht ferner in Kommunikationsverbindung mit einem lokalen Intranet 28 der Empfängerstelle 22. Am lokalen Intranet 28 kommunikationstechnisch angeschlossen sind ferner ein PC 32 sowie ein Fernsehgerät 30. Für das Fernsehgerät 30 ist ferner eine Fernbedienungseinheit 34 vorgesehen, die über eine IR-Kommunikationsverbindung 36 das Fernsehgerät 30 steuern kann. Darüber hinaus ist die Fernbedienungseinheit 34 dafür vorgesehen, Steuerbefehle über das Fernsehgerät 30, das Intranet, die Kommunikationseinheit 24, sowie die Telefonverbindung 18 an die Sendestelle 20 abzugeben.

Im einzelnen kann ein Verfahrensablauf gemäß der Erfindung wie folgt in das System gemäß Fig. 1 implementiert werden. Ein nicht näher dargestellter Nutzer im Bereich der Sendestelle 20 beabsichtigt, einen Dokumentationsfilm anzusehen. Zu diesem Zweck stellt er mittels des PCs 32 eine Kommunikationsverbindung zur Sendestelle 20 her, indem dort ein nicht näher dargestellter Dialer aktiviert wird, der eine Kommunikationsverbindung über das lokale Intranet 28, die Kommunikationseinheit 24 und die Telefonverbindung 18 zur Zentrale 10 der Sendestelle 20 herstellt. Die Zentrale 10 erstellt nun eine Übersicht über sämtliche verfügbaren Informationsströme, d. h. im vorliegenden Fall über die Filme und die Musikstücke, die auf den unterschiedlichen Servern der Sendestelle 20 abrufbar bereit stehen. Diese Übersicht kann eine entsprechende Struktur aufweisen und über ein geeignetes Programm auf dem PC 32 nach bestimmten vorgegebenen Informationsströmen durchsucht werden. Der Nutzer wählt einen Dokumentarfilm aus, der nunmehr durch die Zentrale vom Server 40 in den Abrufserver 12 heruntergeladen wird. Zugleich übermittelt die Zentrale 10 eine Berechtigung 52 über die Kommunikationsverbindung zurück an den PC 32.

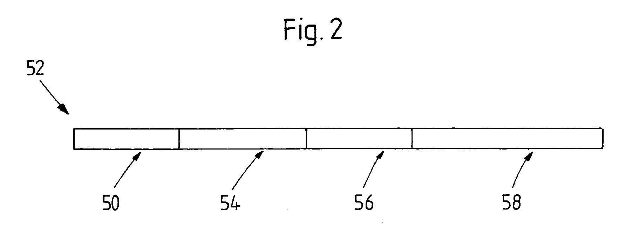

Eine mögliche Gestaltung der Berechtigung 52 ist in Fig. 2 gezeigt. Danach besteht die Berechtigung aus einer alphanumerischen Ziffernfolge, deren erste fünf Ziffern eine fortlaufende Berechtigungsnummer aus alphanumerischen Zeichen aufweist. Darauf folgt ein Bereich 54 eines Zeitbereichscodes, der maßgeblich für die Gültigkeit der Berechtigung ist. Im vorliegenden Fall ist vorgesehen, daß die Berechtigung nach Start des Informationsstroms eine Gültigkeit von zwei Stunden hat. Vorliegend umfaßt dieser Bereich sechs Zeichen. Daran schließt sich ein Bereich 56 mit fünf Zeichen an, in dem ein Kategoriecode hinterlegt ist, der im vorliegenden Fall für die Klasse bzw. Kategorie der Informationsströme vorgesehen ist. Im vorliegenden Fall entspricht der Code der Auswahl der Kategorie Dokumentationsfilm. Der sich daran anschließende Bereich 58 mit neun Zeichen ist zunächst frei.

Bei der Rückübermittlung der Berechtigung fügt der PC 32 Verifikationsdaten in den Bereich 58 ein, und übermittelt die Berechtigung 52 zurück an die Zentrale 10. Die Zentrale 10 prüft den Verifikationsbereich und speichert die vervollständigte Berechtigung 52 in einem nicht näher dargestellten Speicher ab.

Der Nutzer startet nun durch entsprechende Eingaben auf dem PC 32 die Übermittlung des Informationsstroms, und zwar des ausgewählten Dokumentationsfilms vom Abrufserver 12 über das Kabel-TV-Netzwerk, die Kommunikationseinheit 24 und das lokale Intranet 28. Die Wiedergabe erfolgt auf dem PC 32. Während der Übermittlung des Informationsstromes bleibt die Telefonverbindung 18 aufrecht erhalten. Wie sich im folgenden noch zeigen wird, ist über diese Telefonverbindung 18 eine Steuerung der Übermittlung des Informationsstroms möglich.

Entschließt sich nunmehr der Nutzer seinen Standort in der Empfangsstelle 22 zu wechseln, indem er beispielsweise von dem in seinem Arbeitszimmer aufgestellten PC 32 zu dem in seinem Wohnzimmer aufgestellten Fernsehgerät 30 wechseln möchte, so wird er durch eine entsprechende Eingabe an seinem PC 32 einen Haltebefehl an die Zentrale 10 übermitteln. Diese empfängt den Haltebefehl und stoppt die Übermittlung des Informationsstroms vom Abrufserver 12. Von der Zentrale 10 wird nunmehr statt des Informationsstroms eine optisch darstellbare Information dergestalt übermittelt, daß auf dem Bildschirm "Information angehalten" dargestellt wird.

Der Nutzer wechselt nun zu seinem Fernsehgerät 30, welches er vorliegend mittels der Fernbedienungseinheit 34 über die IR-Kommunikationsverbindung 36 in den aktiven Betriebszustand versetzt. Mit der Fernbedienung 34 wählt der Nutzer den Kanal aus, der für den Empfang des Informationsstroms über das lokale Intranet 28 vorgesehen ist. Er erhält dort die Anzeige, wie sie auf dem Monitor des PC 32 dargestellt ist.

Mit der Fernbedienung 34 kann der Nutzer nun durch Betätigung einer Tastenkombination einen Befehl an das Fernsehgerät 30 übermitteln, welches dieses als an die Sendestelle 20 zu übermittelndes Steuersignal erkennt. Das Fernsehgerät 30 übermittelt den Befehl "Informationsstrom fortsetzen" über die bekannte Kommunikationsverbindung an die Zentrale 10. Diese steuert den Abrufserver 12 dahingehend, daß die Übermittlung des Informationsstroms vom Abrufserver 12 zur Empfängerstelle 22 fortgesetzt wird.

In der vorliegenden Ausgestaltung ist der Weiterbetrieb des PC 32 nicht mehr erforderlich, weshalb dieser nach einer Übergabe des eingehenden Informationsstroms an das Fernsehgerät 30 heruntergefahren und abgeschaltet werden kann. Die Steuerung des Informationsstroms erfolgt nunmehr ausschließlich durch das Fernsehgerät 30 in Verbindung mit der Fernbedienungseinheit 34.

Mit der Übergabe des Informationsstroms vom PC 32 zum Fernsehgerät 30 wird auch die Berechtigung 52 vom PC 32 an das Fernsehgerät 30 übergeben. Dies hat den Zweck, daß die Zentrale 10 in stochastisch verteilten Zeitabständen die Gültigkeit und das Vorliegen der Berechtigung prüfen kann. Hierzu wird über die Telefonverbindung 18 ein Abfragesignal an die Kommunikationseinheit 24 übermittelt, die ihrerseits über das Intranet 28 von der Zielstelle des Informationsstroms die vorliegende Berechtigung 52 abfragt und an die Zentrale übermittelt. Die Zentrale 10 überprüft die Berechtigung 52 und vergleicht sie mit einem abgespeicherten Wert. Auf diese Weise lassen sich beispielsweise Manipulationen an der Berechtigung 52 ermitteln. Wurde die Berechtigung 52 manipuliert, wird die Übermittlung des Informationsstroms unmittelbar abgebrochen.

Beabsichtigt nunmehr der Nutzer, einen Teil des Informationsstroms wiederholt übermitteln zu lassen, so gibt er die entsprechenden Steuerbefehle über die Fernbedienungseinheit 34 ein, die daraufhin auf dem vorbeschriebenen Weg an die Zentrale 10 übermittelt werden. Diese unterbricht dann die Übermittlung des Informationsstroms vom Abrufserver 12 und veranlaßt diesen, an einer vorgegebenen Stelle die Informationsübermittlung fortzusetzen.

Stellt der Nutzer fest, daß der von ihm ausgewählte Informationsstrom für ihn uninteressant ist und möchte er statt dessen einen anderen Informationsstrom übermittelt bekommen, so wird er erneut die Übersicht von der Zentrale 10 anfordern und einen anderen Dokumentarfilm auswählen. Wohlgemerkt, die vorliegende Berechtigung 52 ist nur für Dokumentationsfilme vorgesehen. Eine andere Klasse bzw. Kategorie kann mit dieser Berechtigung nicht angewählt werden. Der Nutzer wechselt nunmehr zu einem anderen Dokumentationsfilm und startet die Übermittlung dessen Informationsstroms.

In einer alternativen Ausgestaltung kann vorgesehen sein, daß der Verifikationsbereich an das entsprechende Wiedergabegerät gekoppelt ist. So kann beispielsweise der Verifikationsbereich eine Identifikation des PCs 32 bzw. Fernsehgeräts 30 enthalten. In diesem Fall ist die Umschaltung der Wiedergabe vom PC 32 auf das Fernsehgerät 30 bzw. umgekehrt nicht möglich.

In einer weiteren Alternative zum vorliegenden Ausführungsbeispiel kann vorgesehen sein, daß anstelle der Telefonverbindung 18 sowie des Kabel-TV-Netzwerks 16 eine Verbindung über das Internet zum Einsatz kommt. In diesem Fall ist die Kommunikationsverbindung bidirektional ausgebildet, so daß eine separate Telefonverbindung 18 nicht erforderlich ist. Sowohl die Übermittlung des Informationsstroms als auch die Rückübermittlung von Steuerbefehlen und des Berechtigungscodes erfolgt einzig über das Internet in bidirektionaler Weise. In dieser Ausgestaltung erweist es sich ferner als vorteilhaft, daß die Kommunikationseinheit 24 eine flüchtige Speichereinheit 26 aufweist. Bekanntermaßen werden Informationsströme in Datenpakete umgewandelt, die einzeln über unterschiedliche Wege des Internets an die Empfängerstelle 22 übermittelt werden. Dort kommen sie in einer quasi zufälligen Reihenfolge an. Die Speichereinheit 26 ermöglicht es nunmehr, daß die Kommunikationseinheit 24 die einzelnen Datenpakete in ihrer richtigen Reihenfolge wieder zusammensetzt und so den ursprünglich zu übermittelnden Informationsstrom zurückgewinnt. Dieser wird dann in vorgegebener Weise in das Intranet 28 eingespeist.

Gemäß einem weiteren Ausführungsbeispiel ist die Übermittlung eines Informationsstroms sequentiell auf mehrere Server verteilt. Der vollständige Informationsstrom wird erst im Abrufserver 12 zusammengestellt, so daß er bestimmungsgemäß übermittelt werden kann.

In einer weiteren Ausgestaltung kann der Nutzer mit dem Antrag auf eine Berechtigung zugleich einen Kommunikationskanal vorgeben. Dieser kann beispielsweise in einer Telefonverbindung bestehen, dem Kabel-TV-Netzwerk, dem Internet oder einer weiteren verfügbaren Kommunikationsverbindung. Auf diese Weise hat der Nutzer Einfluß auf Qualität und Kosten der Übermittlung des Informationsstroms.

Die in den Fign. dargestellten Ausführungsbeispiele dienen lediglich der Erläuterung der Erfindung und sind für diese nicht beschränkend.

### Bezugszeichenliste

- 10: Zentrale
- 12: Abrufserver
- 14: Kommunikationsverbindung
- 16: Kabel-TV-Netzwerk
- 18: Telefonverbindung
- 20: Sendestelle
- 22: Empfängerstelle
- 24: Kommunikationseinheit
- 26: Flüchtige Speichereinheit
- 28: Lokales Intranet
- 30: Fernsehgerät
- 32: PC
- 34: Fernbedienungseinheit
- 36: IR-Kommunikationsverbindung
- 38: Server für Abenteuerfilme

- 40: Server für Dokumentationsfilme
- 42: Server für Fantasiefilme
- 44: Server für klassische Musik
- 46: Server für Pop-Musik
- 48: Server für Heimatmusik
- 50: Zuordnungscodebereich
- 52: Berechtigungscode
- 54: Zeitbereichscode
- 56: Klassencode
- 58: Verifikationsbereich

## Patentansprüche

1. Verfahren zur Übermittlung eines Informationsstromes, der abrufbereit auf Anforderung einer Empfangsstelle vorgehalten wird, wobei über verfügbare Informationsströme eine Übersicht erstellt und unter Zuordnen einer Berechtigung abrufbar bereitgestellt wird,
**dadurch gekennzeichnet,**
**daß** ein Kommunikationskanal zur Übermittlung des ausgewählten Informationsstromes bereitgestellt wird, der gewünschte Informationsstrom ausgewählt wird und an eine vorgebbare Empfängerstelle übermittelt wird.

2. Verfahren nach Anspruch 1, **dadurch gekennzeichnet, daß** der Informationsstrom digital und/oder analog übermittelt wird.

3. Verfahren nach Anspruch 1 oder 2, **dadurch gekennzeichnet, daß** der Informationsstrom zeitbeschränkt übermittelt wird.

4. Verfahren nach einem der Ansprüche 1 bis 3, **dadurch gekennzeichnet, daß** der Informationsstrom gesteuert übermittelt wird.

5. Verfahren nach einem der Ansprüche 1 bis 4, **dadurch gekennzeichnet, daß** zum Steuern der Übermittlung des Informationsstroms Empfängerbefehle verwendet werden.

6. Verfahren nach einem der Ansprüche 1 bis 5, **dadurch gekennzeichnet, daß** die Bereitstellung des Kommunikationskanals durch die Empfängerstelle vorgebbar ist.

7. Verfahren nach einem der Ansprüche 1 bis 6, **dadurch gekennzeichnet, daß** der Informationsstrom zumindest teilweise parallel über den Kommunikationskanal übermittelt wird.

8. Verfahren nach einem der Ansprüche 1 bis 7, **dadurch gekennzeichnet, daß** ein bidirektionaler Kommunikationskanal verwendet wird.

9. Verfahren nach einem der Ansprüche 1 bis 8, **dadurch gekennzeichnet, daß** die Empfängerbefehle über einen separaten Kommunikationskanal an eine Sendestelle übermittelt werden.

10. Verfahren nach einem der Ansprüche 1 bis 9, **dadurch gekennzeichnet, daß** mehrere Sendestellen verwendet werden.

11. Verfahren nach einem der Ansprüche 1 bis 10, **dadurch gekennzeichnet, daß** zur Bereitstellung des Informationsstroms die Informationsstromquellen verknüpft werden.

12. Verfahren nach einem der Ansprüche 1 bis 11, **dadurch gekennzeichnet, daß** die Bereitstellung des Informationsstroms durch eine Zentrale gesteuert wird.

13. Verfahren nach einem der Ansprüche 1 bis 12, **dadurch gekennzeichnet, daß** der Informationsstrom durch die Zentrale abrufbar zusammengestellt wird.

14. Verfahren nach einem der Ansprüche 1 bis 13, **dadurch gekennzeichnet, daß** die Übersicht durch die Zentrale erstellt wird.

15. Verfahren nach einem der Ansprüche 1 bis 14, **dadurch gekennzeichnet, daß** die Berechtigung durch die Zentrale vergeben wird.

16. Verfahren nach einem der Ansprüche 1 bis 15, **dadurch gekennzeichnet, daß** die Berechtigung für mehrere Informationsströme vergeben wird.

17. Verfahren nach einem der Ansprüche 1 bis 16, **dadurch gekennzeichnet, daß** die Berechtigung für einen vorgebbaren Zeitraum vergeben wird.

18. Verfahren nach einem der Ansprüche 1 bis 17, **dadurch gekennzeichnet, daß** die Berechtigung überprüft wird.

19. Verfahren nach einem der Ansprüche 1 bis 18, **dadurch gekennzeichnet, daß** die Prüfung der Berechtigung während der Übermittlung des Informationsstroms wiederholt wird.

20. Verfahren nach einem der Ansprüche 1 bis 19, **dadurch gekennzeichnet, daß** die Berechtigung nach Abbruch der Übermittlung erlischt.

21. Verfahren nach einem der Ansprüche 1 bis 20, **dadurch gekennzeichnet, daß** die Berechtigung die Erlaubnis zum Speichern des Informationsstroms auf einem Informationsträger umfaßt.

22. Verfahren nach einem der Ansprüche 1 bis 21, **dadurch gekennzeichnet, daß** der Informationsstrom zumindest zeitweise durch die Empfängerstelle gespeichert wird.

23. Verfahren nach einem der Ansprüche 1 bis 22, **dadurch gekennzeichnet, daß** der Informationsträger nach Wiedergabe des Informationsstroms gelöscht wird.

24. Verfahren nach einem der Ansprüche 1 bis 23, **dadurch gekennzeichnet, daß** zur Verifikation der Berechtigung die Auswertung biometrischer Daten verwendet wird.

25. Verfahren nach einem der Ansprüche 1 bis 24, **dadurch gekennzeichnet, daß** der Informationsstrom zur Übermittlung verschlüsselt wird.

26. Verfahren nach einem der Ansprüche 1 bis 25, **dadurch gekennzeichnet, daß** der Informationsstrom mit einer Redundanz versehen wird.

27. Verfahren nach einem der Ansprüche 1 bis 26, **dadurch gekennzeichnet, daß** während der Übermittlung ein anderer Informationsstrom ausgewählt wird.

28. Verfahren nach einem der Ansprüche 1 bis 27, **dadurch gekennzeichnet, daß** als Empfängerstelle ein Netzwerk verwendet wird.

29. Verfahren nach einem der Ansprüche 1 bis 28, **dadurch gekennzeichnet, daß** der Informationsstrom nur an einer vorgebbaren Wiedergabestelle der Empfangsstelle wiedergegeben wird.

30. Verfahren nach einem der Ansprüche 1 bis 29, **dadurch gekennzeichnet, daß** während der Übermittlung des Informationsstroms die Wiedergabestelle umgeschaltet wird.

31. Verfahren nach einem der Ansprüche 1 bis 30, **dadurch gekennzeichnet, daß** der Informationsstrom nur an eine für diesen Informationsstrom zugelassene Wiedergabestelle übermittelt wird.
